# EUROPEAN PATENT SPECIFICATION

(11) **EP 2 688 251 B1**
(45) Date of publication and mention of the grant of the patent: **23.05.2018**
(21) Application number: 12005218.8
(22) Date of filing: 16.07.2012
(51) Int. Cl.: H04L 12/46, H02H 7/26, H04B 3/54, H04L 29/08, G06F 17/30, G05B 15/02, G05F 1/66, H02J 13/00, H04L 12/10, H04L 12/18, H04W 4/06, H04W 88/16, H04L 12/28

(54) **Process and bridge-IED, Intelligent Electronic Device, adapted to route messages between sub-networks**
Verfahren und Brücke-IED, Intelligent Electronic Device, das zur Weiterleitung von Nachrichten zwischen Unter-Netzwerke angepasst ist
Procédé et pont-IED, Intelligent Electronic Device, adapté pour router des messages entre des sous-réseaux

(43) Date of publication of application: 22.01.2014
(73) Proprietor: ABB Schweiz AG, 5400 Baden (CH)
(72) Inventor: Büker, Horst, 32423 Minden (DE)
(74) Representative: Marks, Frank

(56) References cited:
- EP-A1- 2 432 133
- WO-A1-00/76131
- WO-A2-03/019864
- FR-A1- 2 848 051
- "IEEE Standard Test Methods for Use in the Evaluation of Message Communications Between Intelligent Electronic Devices in an Integrated Substation Protection, Control and Data Acquisition System;IEEE Std C37.115-2003", IEEE STANDARD, IEEE, PISCATAWAY, NJ, USA, 1 January 2004 (2004-01-01), page _1, XP017603679, ISBN: 978-0-7381-3972-2
- "IEEE Standard for SCADA and Automation Systems;IEEE Std C37.1-2007 (Revision of IEEE Std C37.1-1994) ED - Anonymous", IEEE STANDARD; [IEEE STANDARD], IEEE, PISCATAWAY, NJ, USA, 8 May 2008 (2008-05-08), pages 1-143, XP017694821, ISBN: 978-0-7381-5378-0

## Description

The invention relates to a Bridge-IED (Intelligent Electronic Device) to route IEC61850 GOOSE messages between sub-networks e.g. in power generation facilities or in electric power transformation substations. Furthermore the invention relates to a sub-network system e.g. in power generation facilities or in electric power transformation substations, wherein each sub-network contains a plurality of Bridge-IED's.

### Background of the invention:

IEC 61850 is an Ethernet-based international standard for communication in power generation facilities and electric power transformation substations to integrate all of the protection, control, measurement and monitoring functions within a substation or a sub-network and to provide Intelligent Electronic Devices for the high-speed substation protection applications, interlocking and intertripping.

The term or mechanism GOOSE (Generic Object Oriented Substation Events) describes a control model mechanism in which any format of data, e.g. status, value, are grouped into a data set, transmitted within a short time period and used to ensure specified transmission speed and reliability.

GOOSE data is directly embedded into Ethernet data packets and works on publisher-subscriber mechanism on multicast or broadcast addresses. The GOOSE communication is specified in the IEC 61850 Standard by the International Electrotechnical Commission (IEC).

The IEC61850 GOOSE is an advanced version of the UCA GOOSE. A GOOSE message is used to exchange data between IED's. GOOSE is a mechanism for fast transmission of substation events, such as commands and alarms. A single GOOSE message sent by an IED can be received and used by several receivers. In a common sub-network one device, the sender publishes information, while only the subscriber devices are receiving it. The reaction of each receiver depends on its configuration and functionality.

Furthermore GOOSE is designed as Publisher-Subscriber model and the publisher IED transmit as multicast to all connected subscriber IEDs. Generally, all IEDs that communicate via GOOSE messages have to be combined in one sub-network. The sub-network could be a physical sub-network or via VLAN (virtual LAN) configuration in a logical sub-network, so that important signals like e.g. protection signals can only be transferred between IEDs in the same sub-network

In the IEC 61850 specification a GOOSE protocol is scheduled for data exchange among IEDs, also being called horizontal communication or horizontal fast IED-IED communication and is generally based on peer-to-peer communication.

It is known from EP 2 432 133 A1 to use an inter-substation communication channel for transparent transmission of GOOSE/GSSE messages according to the standard IEC 61850-8-1 and to comprise teleprotection or other inter-substation commands.

WO 03/019864 A2 discloses a method for bridging a UPnP (Universal Plug and Play) network and a HAVi (Home Audio/Video interoperability) network where both networks are connected to a bridge device representing software elements from one network to the other network.

WO 00/76131 teaches a device and a method for bridging a HAVi network and a UPnP network.

FR 2848051 A1 discloses a two network gateway process having a global identification connection to a virtual network. There is a gateway between the real and virtual networks. A second gate emulation communicates with a second network equipment.

In the "IEEE Standard Test Methods for Use in the Evaluation of Message Communications Between Intelligent Electronic Devices in an Integrated Substation Protection, Control and Data Acquisition System;IEEE Std C37.115-2003", IEEE STANDARD, IEEE, PISCATAWAY, NJ, USA, 1 January 2004 (2004-01-01), page _1, XP017603679, ISBN: 978-0-7381-3972-2 are standard communication modeling, terminology, evaluation criteria and performance measures for communication test scenarios described.

The "IEEE Standard for SCADA and Automation Systems; IEEE Std C37.1-2007 (Revision of IEEE Std C37.1-1994) ED - Anonymous", IEEE STANDARD; [IEEE STANDARD], IEEE, PISCATAWAY, NJ, USA, 8 May 2008 (2008-05-08), pages 1-143, XP017694821, ISBN: 978-0-7381-5378-0 defines the requirements for SCADA and automation systems in substations.

### Statement of Problem

All known substation IED's have only one Ethernet interface with communication protocol specified in IEC 61851 Edition1, and for the new defined redundancy requirement in IEC 61850 Edition2 a second Ethernet interface with switch functionality inside the IED (HSR or DRP).

GOOSE messages are not routable between several sub-networks e.g. in power generation facilities or in electric power transformation substations. But protection signals or binary signals and analog values are sent via GOOSE protocol not only used between IED's configured in one SCD (Substation Configuration Description)- file in the same sub-network configured. A SCD- file is a file describing the substation configuration and communication in details. Often it is required, to send such signals to other sub-networks to react on these signals for load shedding application to protect a shutdown of the plant.

### Description of the invention:

This invention provides a new solution to route IEC 61850 GOOSE messages between several sub-networks, e.g. in power generation facilities or in electric power transformation substations, by using an IED- Bridge. Claims 1 and 6 define a process and a bridge-IED according to the invention. Various embodiments are defined by claims 2-5 and 7-10. A described Bridge-IED comprises a base functionality for signal mapping and an additional modular number of communication interfaces each designed as IED with its own configurable CID-file according IEC 61850 requirement. For example, each sub-network is engineered separately with the IEC 61850 engineering tool and the result of this Engineering process is exported in the respective SCD-file.

The communication interface IED of the Bridge-IED is described with an IEC 61850 CID-file and is configured in the IED description. For example, Bridge-IED itself has application software, that allows free filtering and/or mapping of received signals and rearranging the signals to new data telegrams that are published and transferred free from each connected communication interface to the connected sub-networks.

### Benefits of the invention

A described Bridge-IED allows to route GOOSE signals between different sub-networks. The proposed solution can be handled and configured like a standard IED according IEC 61850 for GOOSE communication. It filters or rearranges received and transmitted signals. It is allowed to have a flexible signal configuration by using signal matrix or mapping functionality.

### Brief Description of the Drawings

The subject matter of the invention as well as advantageous refinements and improvements of the invention will be described and explained in more detail using the exemplary embodiments are illustrated in the following drawings, in which:
- Fig. 1: shows an exemplary of the new Bridge-IED with communication interfaces for each connected sub-network, and
- Fig. 2: shows an exemplary Bridge-IED in a redundant embodiment for communication board and/or for backbone electronic.

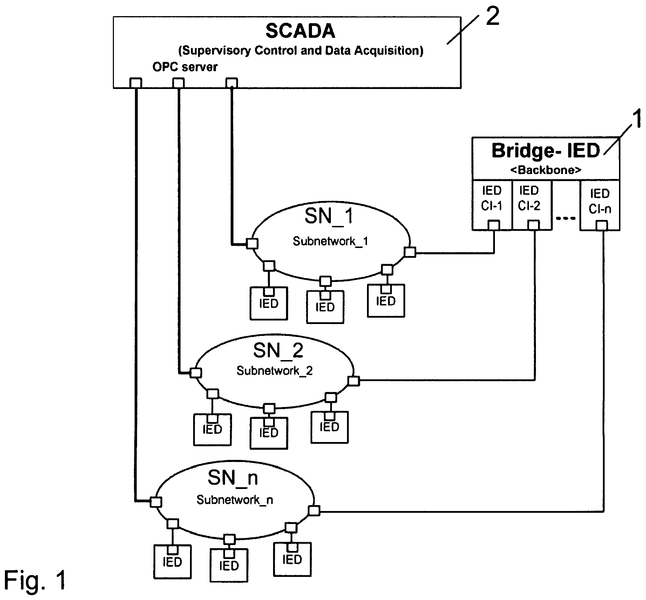

**Figure** 1 presents an exemplary of the Bridge-IED 1 with communication interfaces CI-1, CI-2 ...CI-n for each connected sub-network SN_1, SN_2 ... SN_n in a Supervisory Control and Data Acquisition SCADA by using an OPC Server 2. The exemplary Bridge-IED 1 is implemented in a communication board and/or in backbone electronic.

Each sub-network SN_1, SN_2 ... SN_n contains a plurality of IED's and is connected with the OPC-Server 2 of the SCADA system. IED's are intelligent electronic devices as automation component for substation automation like controllers in a distributed control system (DCS).

The Bridge-IED 1 is a component with base functionality for signal mapping and additional modular number of communication interfaces CI-1, CI-2 ...CI-n each designed as IED with its own configurable CID-file according IEC 61850 requirement. Each sub-network SN_1, SN_2 ... SN_n is engineered separately with an IEC 61850 engineering tool and the result is exported in a SCD-file. The communication interfaces IED CI-1, CI-2 ...CI-n from the Bridge-IED 1 is described with a normal IEC 61850 CID-file (configured IED description) and is handled and configured like a standard IED according IEC 61850 for GOOSE communication.

The Bridge-IED 1 itself has an application software, that allow free filtering and/or mapping of received signals and rearrange the signals to new data telegrams that is be published and transferred free from each connected communication interface CI-1, CI-2 ...CI-n to the connected sub-networks SN_1, SN_2 ... SN_n.

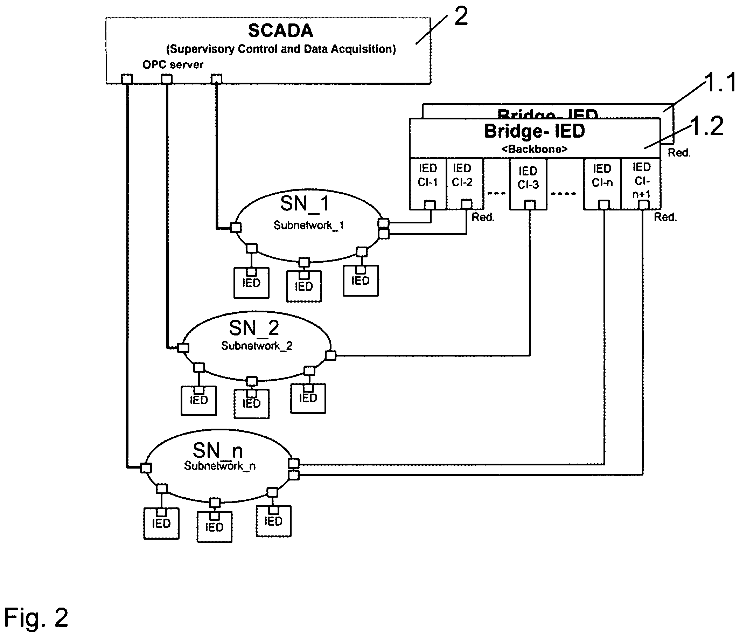

In **figure** 2 is shown an exemplary Bridge-IED's 1.1, 1.2 in a redundant embodiment for communication board and/or for backbone electronic.

Also the communication interfaces IED CI-1, CI-2, CI-3 ...CI-n, CI-n+1 are redundant for each sub-network SN_1, SN_2 ... SN_n.

According to the embodiment shown in Figure 2 for higher availability the Bridge-IED is used in a redundant manner like:
- redundant communication interface CI-1, CI-2, CI-3 ...CI-n, CI-n+1, in which two communication interfaces (e.g. CI-1 and CI-2) are configured in the same sub-network as publisher and/or subscriber,
- redundant Bridge-IED backbone, in which the backbone electronic device part 1.1, 1.2 are set redundant.

The Bridge-IED has more than one IEC 61850 communication interface and each of them engineered in different sub-networks with separate SCD-files. As a result the Bridge-IED allows such a routing functionality inside the IED. Additionally Ethernet network switches can provide such functionality.

## Claims

1. A process of configuring a bridge-IED, a bridge-IED being a bridge with IED functionality, wherin IED means Intelligent Electronic Device, the bridge IED being adapted to route IEC, International Electrotechnical Commission, 61850 GOOSE, Generic Object Oriented Substation Event, signals between sub-networks (SN_1, SN_2 ... SN_n), wherein the bridge-IED comprises a functionality for signal mapping and more than one communication interfaces (CI-1, CI-2 ... CI-n),
the process being **characterized in that**
each one of said communication interfaces has an IEC 61850 compliant CID-, Configured IED Description, file,
the IEC 61850 CID-file of each communication interface (CI-1, CI-2 ... CI-n) is a description of the communication interface (CI-1, CI-2 ...CI-n) of the Bridge-IED (1) and
the IEC 61850 CID file of each communication interface (CI-1, CI-2 ...CI-n) is a configuration of the communication interface (CI-1, CI-2 ...CI-n).

2. A process according to claim 1, comprising the steps of
• engineering each sub-network (SN_1, SN_2 ... SN_n) separately with an IEC 61850 engineering tool and
• exporting the result of this engineering process in a respective SCD-file.

3. A process according to claim 1 - 2, comprising the step of free filtering of received signals and/or rearranging the signals to new data telegrams that are published and transferred free from each connected communication interface (CI-1, CI-2 ...CI-n) to the connected sub-networks (SN_1, SN_2 ... SN_n) by an application software.

4. A process according to claim 1 - 2, comprising the step of mapping of received signals and/or rearranging the signals to new data telegrams that are published and transferred free from each connected communication interface (CI-1, CI-2 ...CI-n) to the connected sub-networks (SN_1, SN_2 ... SN_n) by an application software.

5. A process according to claim 1 - 4, wherein the bridge-IED is configured as a standard IED according IEC 61850 for GOOSE communication.

6. Bridge-IED, a bridge-IED being a bridge with IED functionality,
wherin IED means Intelligent Electronic Device,
the bridge-IED being adapted to route IEC, International Electrotechnical Commission, 61850 GOOSE, Generic Object Oriented Substation Event, messages between sub-networks (SN_1, SN_2 ... SN_n),
the bridge-IED comprising communication interfaces (CI-1, CI-2, CI-3 ...CI-n, CI-n+1),
the bridge-IED being **characterized in that**
each one of said communication interfaces has an IEC 61850 compliant CID-, Configured IED Description, file,
the IEC 61850 CID-file of each communication interface (CI-1, CI-2, ... CI-n) is a description of the communication interface (CI-1 , CI-2 ... CI-n) of the Bridge-IED (1)
the IEC 61850 CID file of each communication interface (CI-1, CI-2, ... CI-n) is a configuration of the communication interface (CI-1, CI-2, ... CI-n),
and
at least two among said communication interfaces (CI-1, CI-2, CI-3 ...CI-n, CI-n+1) interface the same sub-network (SN_1, SN_2 ... SN_n).

7. Bridge-IED according to claim 6, comprising redundant communication interfaces (CI-1, CI-2, CI-3 ...CI-n, CI-n+1), in which the configuration of two communication interfaces (e.g. CI-1 and CI-2) indicates the same sub-network as publisher.

8. Bridge-IED according to claim 6, comprising redundant communication interfaces (CI-1, CI-2, CI-3 ...CI-n, CI-n+1), in which the configuration of two communication interfaces (e.g. CI-1 and CI-2) indicates the same sub-network as subscriber.

9. Bridge-IED according to claim 6, comprising redundant communication interfaces (CI-1, CI-2, CI-3 ...CI-n, CI-n+1), in which the configuration of a communication interface (e.g. CI-1) indicates a sub-network as publisher and the configuration of another communication interface (e.g. CI-2) indicates the same sub-network as subscriber.

10. Sub-network system in power generation facilities or in electric power transformation substations, wherein each sub-network (SN_1, SN_2 ... SN_n) contains a plurality of Bridge-IED's (1, 1.1, 1.2) claimed in any of the claims 6 to 9 and is connected with an Object Linking and Enbedding, OLE, for Process Control-, OPC-, server (2) of a SCADA, Supervisory Control and Data Acquisition, system.

## Patentansprüche

1. Prozess zum Konfigurieren einer Brücken-IED, wobei eine Brücken-IED eine Brücke mit IED-Funktionalität ist, wobei IED eine intelligente elektronische Einrichtung bezeichnet, wobei die Brücken-IED ausgelegt ist, 61850-GOOSE-Signale, Generic-Object-Oriented-Substation-Event-Signale, nach IEC, der Internationalen Elektrotechnischen Kommission, zwischen Subnetzen (SN_1, SN_2 ... SN_n) weiterzuleiten, wobei die Brücken-IED eine Funktionalität zur Signalabbildung und mehr als eine Kommunikationsschnittstelle (CI-1, CI-2 ... CI-n) umfasst,
wobei der Prozess **dadurch gekennzeichnet ist, dass** jede der Kommunikationsschnittstellen eine IEC-61850-konforme CID-Datei, konfigurierte IED-Beschreibungsdatei, aufweist,
wobei die IEC-61850-CID-Datei jeder Kommunikationsschnittstelle (CI-1, CI-2 ... CI-n) eine Beschreibung der Kommunikationsschnittstelle (CI-1, CI-2 ... CI-n) der Brücken-IED (1) ist und
die IEC-61850-CID-Datei jeder Kommunikationsschnittstelle (CI-1, CI-2 ... CI-n) eine Konfiguration der Kommunikationsschnittstelle (CI-1, CI-2 ... CI-n) ist.

2. Prozess nach Anspruch 1, ferner die Schritte umfassend zum
• Konstruieren jedes Subnetzes (SN_1, SN_2 ... SN_n) separat mit einem IEC-61850-Konstruktionswerkzeug und
• Exportieren des Ergebnisses dieses Konstruktionsprozesses in eine jeweilige SCD-Datei.

3. Prozess nach Anspruch 1-2, der den Schritt zum freien Filtern von empfangenen Signalen und/oder Umordnen der Signale in neue Datentelegramme umfasst, die durch eine Anwendungssoftware veröffentlicht und frei von jeder angebundenen Kommunikationsschnittstelle (CI-1, CI-2 ... CI-n) an die angebundenen Subnetze (SN_1, SN_2 ... SN_n) übermittelt werden.

4. Prozess nach Anspruch 1-2, der den Schritt zum Abbilden von empfangenen Signalen und/oder Umordnen der Signale in neue Datentelegramme umfasst, die durch eine Anwendungssoftware veröffentlicht und frei von jeder angebundenen Kommunikationsschnittstelle (CI-1, CI-2 ... CI-n) an die angebundenen Subnetze (SN_1, SN_2 ... SN_n) übermittelt werden.

5. Prozess nach Anspruch 1-4, wobei die Brücken-IED als eine Standard-IED nach IEC 61850 für GOOSE-Kommunikation konfiguriert ist.

6. Brücken-IED, wobei eine Brücken-IED eine Brücke mit IED-Funktionalität ist,
wobei IED eine intelligente elektronische Einrichtung bezeichnet,
wobei die Brücken-IED ausgelegt ist, 61850-GOOSE-Nachrichten, Generic-Object-Oriented-Substation-Event-Signale, nach IEC, der Internationalen Elektrotechnischen Kommission, zwischen Subnetzen (SN_1, SN_2 ... SN_n) weiterzuleiten,
wobei die Brücken-IED Kommunikationsschnittstellen (CI-1, CI-2, CI-3 ... CI-n, CI-n+1) umfasst,
wobei die Brücken-IED **dadurch gekennzeichnet ist, dass**
jede der Kommunikationsschnittstellen eine IEC-61850-konforme CID-Datei, konfigurierte IED-Beschreibungsdatei, aufweist,
wobei die IEC-61850-CID-Datei jeder Kommunikationsschnittstelle (CI-1, CI-2 ... CI-n) eine Beschreibung der Kommunikationsschnittstelle (CI-1, CI-2 ... CI-n) der Brücken-IED (1) ist
und die IEC-61850-CID-Datei jeder Kommunikationsschnittstelle (CI-1, CI-2 ... CI-n) eine Konfiguration der Kommunikationsschnittstelle (CI-1, CI-2 ... CI-n) ist und
mindestens zwei der Kommunikationsschnittstellen (CI-1, CI-2, CI-3 ... CI-n, CI-n+1) an das gleiche Subnetz (SN_1, SN_2 ... SN_n) ankoppeln.

7. Brücken-IED nach Anspruch 6, die redundante Kommunikationsschnittstellen (CI-1, CI-2, CI-3 ... CI-n, CI-n+1) umfasst, in denen die Konfiguration von zwei Kommunikationsschnittstellen (z. B. CI-1 und CI-2) das gleiche Subnetz als Veröffentlichungseinheit angibt.

8. Brücken-IED nach Anspruch 6, die redundante Kommunikationsschnittstellen (CI-1, CI-2, CI-3 ... CI-n, CI-n+1) umfasst, in denen die Konfiguration von zwei Kommunikationsschnittstellen (z. B. CI-1 und CI-2) das gleiche Subnetz als Teilnehmer angibt.

9. Brücken-IED nach Anspruch 6, die redundante Kommunikationsschnittstellen (CI-1, CI-2, CI-3 ... CI-n, CI-n+1) umfasst, in denen die Konfiguration einer Kommunikationsschnittstelle (z. B. CI-1) ein Subnetz als Veröffentlichungseinheit angibt und die Konfiguration einer anderen Kommunikationsschnittstelle (z. B. CI-2) das gleiche Subnetz als Teilnehmer angibt.

10. Subnetzsystem in Energieerzeugungsanlagen oder in elektrischen Energietransformatorstationen, wobei jedes Subnetz (SN_1, SN_2 ... SN_n) eine Vielzahl von Brücken-IEDs (1, 1.1, 1.2) nach einem der Ansprüche 6 bis 9 beinhaltet und mit einem Object-Linking-and-Embedding-Server, OLE-Server, zur Prozesssteuerung, OPC-Server (2) eines SCADA-, Supervisory-Control-and-Data-Acquisition-Systems verbunden ist.

## Revendications

1. Procédé de configuration d'un pont-DEI, un pont-DEI étant un pont ayant une fonctionnalité de DEI, où DEI signifie Dispositif Electronique Intelligent, le pont-DEI étant adapté pour acheminer des signaux de type GOOSE (de l'anglais *"Generic Object Oriented Substation Event",* "Evénement générique de sous-station orienté objet"), selon la norme CEI, Commission Electronique Internationale, 61850, entre des sous-réseaux (SN_1, SN_2 ... SN_n), le pont-DEI comprenant une fonctionnalité de mappage de signaux et plus d'une interface de communication (CI-1, CI-2 ... CI-n), le procédé étant **caractérisé en ce que** chacune desdites interfaces de communication a un fichier CID (de l'anglais "*Configured IED Description",* "Description de DEI configuré"), compatible CEI 61850, le fichier CID CEI 61850 de chaque interface de communication (CI-1, CI-2 ... CI-n) est une description de l'interface de communication (CI-1, CI-2 ... CI-n) du pont-DEI (1) et le fichier CID CEI 61850 de chaque interface de communication (CI-1, CI-2 ... CI-n) est une configuration de l'interface de communication (CI-1, CI-2 ... CI-n).

2. Procédé selon la revendication 1, comprenant les étapes consistant à :
- étudier chaque sous-réseau (SN_1, SN_2 ... SN_n) séparément avec un outil d'ingénierie CEI 61850, et
- exporter le résultat de ce processus d'ingénierie dans des fichiers SCD respectifs.

3. Procédé selon les revendications 1 à 2, comprenant l'étape consistant à filtrer librement les signaux reçus et/ou réarranger les signaux en de nouveaux télégrammes de données qui sont publiés et transférés librement de chaque interface de communication connectée (CI-1, CI-2 ... CI-n) aux sous-réseaux connectés (SN_1, SN_2 ... SN_n) par un logiciel d'application.

4. Procédé selon les revendications 1 à 2, comprenant l'étape consistant à mapper les signaux reçus et/ou réarranger les signaux en de nouveaux télégrammes de données qui sont publiés et transférés librement de chaque interface de communication connectée (CI-1, CI-2 ... CI-n) aux sous-réseaux connectés (SN_1, SN_2 ... SN_n) par un logiciel d'application.

5. Procédé selon les revendications 1 à 4, dans lequel le pont-DEI est configuré comme un DEI standard selon la norme CEI 61850 pour une communication GOOSE.

6. Pont-DEI, un pont-DEI étant un pont ayant une fonctionnalité de DEI, où DEI signifie Dispositif Electronique Intelligent, le pont-DEI étant adapté pour acheminer des signaux de type GOOSE (de l'anglais "*Generic Object Oriented Substation Event",* "Evénement générique de sous-station orienté objet"), selon la norme CEI, Commission Electronique Internationale, 61850, entre des sous-réseaux (SN_1, SN_2 ... SN_n), le pont-DEI comprenant des interfaces de communication (CI-1, CI-2, CI-3 ... CI-n, CI-n+1), le pont-DEI étant **caractérisé en ce que** chacune desdites interfaces de communication a un fichier CID (de l'anglais "*Configured IED Description",* "Description de DEI configuré"), compatible CEI 61850, le fichier CID CEI 61850 de chaque interface de communication (CI-1, CI-2 ... CI-n) est une description de l'interface de communication (CI-1, CI-2 ... CI-n) du pont-DEI (1), le fichier CID CEI 61850 de chaque interface de communication (CI-1, CI-2 ... CI-n) est une configuration de l'interface de communication (CI-1, CI-2 ... CI-n), et au moins deux parmi lesdites interfaces de communication (CI-1, CI-2, CI-3 ... CI-n, CI-n+1) sont reliées au même sous-réseau (SN_1, SN_2 ... SN_n) .

7. Pont-DEI selon la revendication 6, comprenant des interfaces de communication redondantes (CI-1, CI-2, CI-3 ... CI-n, CI-n+1), où la configuration de deux interfaces de communication (par exemple, CI-1 et CI-2) indique le même sous-réseau en tant qu'éditeur.

8. Pont-DEI selon la revendication 6, comprenant des interfaces de communication redondantes (CI-1, CI-2, CI-3 ... CI-n, CI-n+1), où la configuration de deux interfaces de communication (par exemple, CI-1 et CI-2) indique le même sous-réseau en tant qu'abonné.

9. Pont-DEI selon la revendication 6, comprenant des interfaces de communication redondantes (CI-1, CI-2, CI-3 ... CI-n, CI-n+1), où la configuration d'une interface de communication (par exemple, CI-1) indique un sous-réseau en tant qu'éditeur et la configuration d'une autre interface de communication (par exemple, CI-2) indique le même sous-réseau en tant qu'abonné.

10. Système de sous-réseau dans des installations de production d'énergie ou dans des sous-stations de transformation d'énergie électrique, dans lequel chaque sous-réseau (SN_1, SN_2 ... SN_n) contient une pluralité de ponts-DEI (1, 1.1, 1.2) selon l'une quelconque des revendications 6 à 9 et est connecté à un serveur OLE (de l'anglais *"Object Linking and Embedding*", "Liaison et incorporation d'objet"), pour Commande de Procédé, OPC, (2), d'un système SCADA (de l'anglais "*Supervisory Control and Data Acquisition",* "Télésurveillance et Acquisition de Données").
